# EUROPÄISCHE PATENTANMELDUNG

(11) **EP 4 549 595 A1**
(43) Veröffentlichungstag der Anmeldung: **07.05.2025**
(21) Anmeldenummer: 23207639.8
(22) Anmeldetag: 03.11.2023
(51) Int. Cl.: C21B 5/06, C01B 3/02, C01B 3/04, C01B 3/34, C01B 3/38, C21B 7/00, C21B 13/00, C22B 9/05

(54) **REDUKTION METALLOXIDHALTIGEN MATERIALS AUF BASIS VON AMMONIAK NH3 UND KOHLENSTOFFHALTIGEM GAS**

(71) Anmelder: Primetals Technologies Austria GmbH, 4031 Linz (AT)
(72) Erfinder: Eglauer, Christoph, 4020 Linz (AT); Millner, Robert, 3382 Loosdorf (AT)
(74) Vertreter: Metals@Linz

(57) **Zusammenfassung**

Verfahren zur Reduktion von metalloxidhaltigem Material, wobei ein unter Nutzung von Ammoniak NH₃ und unter Nutzung von kohlenstoffhaltigem Gas gewonnenes Reduktionsgas eingesetzt wird, und bei der Gewinnung des Reduktionsgases ein Gemisch umfassend Ammoniak und kohlenstoffhaltiges Gas zubereitet wird. Zumindest eine Teilmenge des Gemischs wird zuerst bei einer Temperatur in einem Bereich mit einer Obergrenze von 650°C ammoniakspaltenden Bedingungen ausgesetzt, wobei ein Spaltgasgemisch entsteht. Danach wird zumindest eine Teilmenge des Spaltgasgemisches bei einer Temperatur in einem Bereich mit einer Untergrenze von 700°C Reformierungsbedingungen ausgesetzt. Eine Vorrichtung dafür umfasst ein Reduktionsaggregat (30), eine in das Reduktionsaggregat (30) mündende Reduktionsgaseinleitung (40), eine Zuleitung für kohlenstoffhaltiges Gas (50), eine Ammoniakzuleitung (60), und ist dadurch gekennzeichnet, dass die Zuleitung für kohlenstoffhaltiges Gas (50) und die Ammoniakzuleitung (60) in eine Gemischleitung (70) münden,
und die Gemischleitung (70) in eine Vorrichtung zur Ammoniakspaltung (80) mündet, und von der Vorrichtung zur Ammoniakspaltung (80) eine Spaltgasgemischleitung (90) ausgeht, welche in eine Reformierungsvorrichtung (100) mündet, und von der Reformierungsvorrichtung (100) eine Reformierungsgasleitung (110) ausgeht, welche in die Reduktionsgaseinleitung (40) mündet.

## Beschreibung

### Gebiet der Technik

Die Anmeldung betrifft Verfahren und Vorrichtung zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird.

### Stand der Technik

Es ist bekannt, metalloxidhaltiges, beispielsweise eisenoxidhaltiges, Material - wie beispielsweise Erze - mittels reduzierenden Gases zu reduzieren. So etwa mittels Direktreduktion mit Reduktionsgas in einem Reduktionsaggregat, wie beispielsweise einem Reduktionsschacht; auch im Hochofenverfahren wirkt beispielsweise Kohlenmonoxid CO als reduzierendes Gas im Reduktionsaggregat Hochofen. Bei derzeit großindustriell angewendeten, herkömmlichen Verfahren basiert das reduzierende Gas überwiegend auf kohlenstoffhaltigen Gasen, beispielsweise Erdgas oder Koksofengas. Daher fallen dabei große Mengen Kohlendioxid CO₂ an, was unter anderem aus umweltpolitischen Gründen unerwünscht ist.

Zur Verminderung des CO₂-Ausstoßes bei der Reduktion von metalloxidhaltigem Material ist es bekannt, Wasserstoff H₂ als reduzierendes Gas zu verwenden. Dabei kann Wasserstoff als einziges Reduktionsgas verwendet werden, oder in Kombination mit anderen Gasen, beispielsweise erdgasbasierten Reduktionsgasen. Je größer der Anteil von CO₂ neutralem Wasserstoff H₂ im Reduktionsgas ist, desto weniger CO₂ wird emittiert.

Speicherung von Wasserstoff H₂ und Transport vom Ort seiner Erzeugung zu Verbrauchern ist jedoch aufgrund seiner physikalischen Eigenschaften problematisch und mit großem Aufwand verbunden.

Zur Verminderung des CO₂-Ausstoßes bei der Reduktion von metalloxidhaltigem Material ist es auch bekannt, Ammoniak NH₃ als Reduktionsmittel einzusetzen. Ammoniak bietet bezüglich Speicherung und Transport deutliche Vorteile gegenüber Wasserstoff H₂.

Ammoniak kann in Stickstoff und Wasserstoff gespalten werden

2 NH₃ → N₂ + 3H₂

Wasserstoff H₂ kann als Reduktionsmittel mit den Metalloxiden, beispielsweise Eisenoxiden, reagieren:

3 Fe₂O₃ + H₂ → 2 Fe₃O₄ + H₂O

Fe₃O₄ + H₂ → 3 FeO + H₂O

FeO + H₂ → Fe + H₂O

Ammoniak kann aber auch selbst als Reduktionsmittel wirken:

9 Fe₂O₃ + 2 NH₃ → 6 Fe₃O₄ + N₂ + 3 H₂O

3 Fe₃O₄ + 2 NH₃ → 9 FeO + N₂ + 3 H₂O

3 FeO + 2 NH₃ → 3 Fe + N₂ + 3 H₂O

Grundsätzlich kann also unter Nutzung von Ammoniak NH₃ gewonnenes Reduktionsgas zur Reduktion von metalloxidhaltigem Material eingesetzt werden; so ein Reduktionsgas kann beispielsweise Ammoniak NH₃ sein, oder eine Mischung von Ammoniak NH₃ mit einem oder mehreren anderen Gasen - wobei bevorzugt eines oder mehrere auf metalloxidhaltiges Material reduzierend wirken können -, was beispielsweise bei einer Mischung von Ammoniak und seinen Spaltungsprodukten Wasserstoff H₂ und Stickstoff N₂ der Fall wäre, wobei natürlich auch noch andere Gase in der Mischung enthalten sein könnten. Es kann sich bei unter Nutzung von Ammoniak NH₃ erhaltenem Reduktionsgas aber auch um ein Reduktionsgas handeln, das keinen Ammoniak NH₃ enthält, aber das aus einer Spaltung erhaltene Spaltungsprodukt Wasserstoff H₂ - allein oder gemeinsam mit dem Spaltungsprodukt Stickstoff N₂ - enthält, gegebenenfalls in Mischung mit einem oder mehreren anderen Gasen - wobei bevorzugt eines oder mehrere auf metalloxidhaltiges Material reduzierend wirken können.

Solche Reduktionsreaktionen zur Erzeugung von metallischem Eisen Fe mit Wasserstoff H₂ und mit Ammoniak NH₃, und auch die Spaltung von Ammoniak in Stickstoff N₂ und Wasserstoff H₂ sind endotherm. Daraus ergeben sich Probleme bezüglich Aufrechterhaltung für die industrielle Durchführung der Reduktion notwendiger thermodynamischer und kinetischer Bedingungen.

Ein Ausgleich zwischen dem Bestreben, den CO₂-Ausstoß durch vermehrten Einsatz von Ammoniak NH₃ zu vermindern, und den mit Ammoniaknutzung verbundenen Problemen lässt sich durch gemeinsame Nutzung von Ammoniak und von kohlenstoffhaltigem Gas erzielen.

### Zusammenfassung der Erfindung

### Technische Aufgabe

Es ist die Aufgabe der vorliegenden Erfindung, eine Möglichkeit zur gemeinsamen Nutzung von Ammoniak und von kohlenstoffhaltigem Gas bei der Reduktion metalloxidhaltigen Materials vorzustellen.

### Technische Lösung

Die Aufgabe wird gelöst durch ein
Verfahren zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird,
dadurch gekennzeichnet, dass
bei der Gewinnung des Reduktionsgases
ein Gemisch umfassend Ammoniak und kohlenstoffhaltiges Gas zubereitet wird,
und zumindest eine Teilmenge des Gemischs
zuerst bei einer Temperatur in einem Bereich mit einer Untergrenze von 350°C, bevorzugt 450°C, und einer Obergrenze von 650°C, bevorzugt 550°C, ammoniakspaltenden Bedingungen ausgesetzt wird, wobei ein Spaltgasgemisch entsteht,
und danach zumindest eine Teilmenge des Spaltgasgemisches bei einer Temperatur in einem Bereich mit einer Untergrenze von 700°C und einer Obergrenze von 1150°C, bevorzugt 1000°C, Reformierungsbedingungen ausgesetzt wird.

Bei dem metalloxidhaltigen Material handelt es sich bevorzugt um eisenoxidhaltiges Material.

Das Verfahren zur Reduktion ist beispielsweise ein Verfahren zur Direktreduktion.

Das Reduktionsgas wird unter Nutzung von Ammoniak NH₃ erhalten, Ammoniak steuert einen Beitrag zum Reduktionsgas bei.

Das Reduktionsgas ist beispielsweise eine Mischung von Ammoniak NH₃ mit einem oder mehreren anderen Gasen. Es kann sich bei unter Nutzung von Ammoniak NH₃ erhaltenem Reduktionsgas aber auch um ein Reduktionsgas handeln, das keinen Ammoniak NH₃ enthält, aber das aus einer Spaltung erhaltene Spaltungsprodukt Wasserstoff H₂ - allein oder gemeinsam mit dem Spaltungsprodukt Stickstoff N₂ - enthält, in Mischung mit einem oder mehreren anderen Gasen.

Das Reduktionsgas kann also Ammoniak umfassen; es besteht dabei teilweise aus Ammoniak und zusätzlich aus anderen Komponenten.

Als weitere Komponenten des Reduktionsgases sind auf das metalloxidhaltige Material reduzierend wirkende Komponenten bevorzugt; es kann sich bei solchen Komponenten beispielsweise um kohlenwasserstoffhaltige Gase, kohlenstoffhaltige Gase, wasserstoffhaltige Gase, Wasserstoff handeln.

Erfindungsgemäß wird Reduktionsgas unter Nutzung von Ammoniak erhalten, indem Ammoniak gespalten wird, und das dabei entstehende Spaltgasgemisch umfassend Stickstoff und Wasserstoff und gegebenenfalls Ammoniak -, gegebenenfalls nach einer Anreicherung von Wasserstoff oder Abreicherung von Stickstoff - zum Reduktionsgas beisteuert.

Ammoniak steuert einen Beitrag zum Reduktionsgas bei, dieser Beitrag liegt neben dem von dem kohlenstoffhaltigen Gas beigesteuerten Beitrag zum Reduktionsgas vor. Ammoniak liefert - neben den infolge der Nutzung von kohlenstoffhaltigem Gas beigesteuerten Komponenten - weitere Komponenten des Reduktionsgases.

Die Spaltung des Ammoniaks NH3 erfolgt bei einer Temperatur in einem Bereich mit einer Untergrenze und einer Obergrenze unter ammoniakspaltenden Bedingungen. Die Untergrenze des Bereichs kann bei 350°C liegen, bevorzugt liegt sie bei 450°C. Die Obergrenze des Bereichs kann bei 650°C liegen, bevorzugt liegt sie bei 550°C.

Dabei entsteht aus dem Gemisch umfassend Ammoniak und kohlenstoffhaltiges Gas ein Spaltgasgemisch, welches Stickstoff und Wasserstoff - und gegebenenfalls Ammoniak - umfasst. Das Spaltgasgemisch enthält auch Ammoniak, wenn nicht der gesamte Ammoniak im Gemisch bei den ammoniakspaltenden Bedingungen umgesetzt wird, sondern nur eine Teilmenge des Ammoniaks im Gemisch. Der nicht umgesetzte Rest des Ammoniaks aus dem Gemisch ist dann im Spaltgasgemisch als Ammoniak vorhanden. Ein Ammoniakgehalt von bis zu 10 Vol%, bevorzugt bis zu 8 Vol%, besonders bevorzugt bis zu 6 Vol% im Spaltgasgemisch ist akzeptabel.

Zur Erzielung von ammoniakspaltenden Bedingungen werden Katalysatoren eingesetzt, die in diesem Temperaturbereich Ammoniakspaltung katalysieren.

Grundsätzlich kommt Ammoniak jeglicher "Farbe" in Frage. Unter "Farbe" ist damit die Farbgebung in Zusammenhang mit der zugrundeliegenden Produktionsart zu verstehen. Oftmals ist die Farbe des Ammoniaks mit der Farbe des bei der Produktion eingesetzten Wasserstoffs verbunden. Der Ammoniak kann beispielsweise grün sein, beispielsweise wenn er mittels grünen Wasserstoffs erzeugt wurde; er kann blau sein, beispielsweise, wenn er mittels unter Sequestrierung von entstehendem Kohlendioxid CO₂ gewonnenen Wasserstoffs erzeugt wurde. Der Ammoniak kann auch mittels türkisen Wasserstoffs erzeugt werden, beispielsweise, wenn der Wasserstoff unter Abscheidung von entstehendem Kohlenstoff C erzeugt wird; er kann mittels pinken Wasserstoffs erzeugt werden, beispielsweise, wenn der Wasserstoff unter Verwendung von Atomstrom erzeugt wird. Ebenso in Frage kommt ein Gemisch aus einem oder mehreren dieser "Farben" des Ammoniaks, beziehungsweise ein Gemisch von Farben des dem Ammoniak zugrundeliegenden Wasserstoffs.

Das Reduktionsgas wird unter Nutzung von kohlenstoffhaltigem Gas erhalten.

Es kann sich bei dem kohlenstoffhaltigen Gas um ein reines Gas, beispielsweise reines Methan, oder ein kohlenstoffhaltiges Gemisch mehrerer Gase handeln, beispielsweise Erdgas oder Koksofengas. Der Kohlenstoff im kohlenstoffhaltigen Gas kann beispielsweise als Kohlenwasserstoff, beispielsweise Methan CH₄, Ethan C₂H₆, Propan C₃H₈, Butan C₄H₁₀, oder beispielsweise als Kohlenmonoxid CO oder beispielsweise als Kohlendioxid CO₂ vorhanden sein.

Ein verwendetes kohlenstoffhaltige Gas kann beispielsweise Erdgas sein, oder aus dem Reduktionsaggregat ausgeleitetes Topgas - gegebenenfalls nach einer Aufbereitung.

Das kohlenstoffhaltige Gas steuert einen Beitrag zum Reduktionsgas bei, dieser Beitrag liegt neben dem von Ammoniak beigesteuerten Beitrag zum Reduktionsgas vor.

Das kohlenstoffhaltige Gas liefert - neben den infolge der Nutzung von Ammoniak beigesteuerten Komponenten - weitere Komponenten des Reduktionsgases. Als solche weitere Komponenten des Reduktionsgases sind auf das metalloxidhaltige Material reduzierend wirkende Komponenten bevorzugt; es kann sich bei ihnen beispielsweise um kohlenwasserstoffhaltige Gase, kohlenstoffhaltige Gase, wasserstoffhaltige Gase, Wasserstoff handeln.

Erfindungsgemäß erfolgt Nutzung von kohlenstoffhaltigem Gas zumindest unter Reformierung von kohlenstoffhaltigem Gas. Zumindest eine Teilmenge des Spaltgasgemisches wird bei einer Temperatur in einem Bereich mit einer Untergrenze von 700°C, und einer Obergrenze von 1150°C, bevorzugt 1000°C, Reformierungsbedingungen ausgesetzt. Zur Erzielung von Reformierungsbedingungen werden Katalysatoren eingesetzt, die in diesem Temperaturbereich Reformierung katalysieren - genannt Reformierungskatalysatoren.

Die Reformierung erfolgt beispielsweise als Dampfreformierung und/oder CO2-Reformierung nach

CH4+H2O→CO+3H2

CH4+CO2→2CO+2H2.

Dargestellt ist das am Beispiel Methan CH4, für höhere Kohlenwasserstoffverbindungen verläuft die Reformierung analog.

Erfindungsgemäß wird also bei der Gewinnung des Reduktionsgases ein Gemisch umfassend Ammoniak und kohlenstoffhaltigen Gas zubereitet.

Das Gemisch kann beispielsweise durch Vereinigung von Ammoniak mit einem oder mehreren kohlenstoffhaltigen Gasen zubereitet werden; beispielsweise durch Vereinigung von Ammoniak mit Topgas - gegebenenfalls nach einer Aufbereitung des Topgases - und/oder Erdgas. Wenn mit mehreren kohlenstoffhaltigen Gasen vereinigt wird, können diese gemeinsam mit dem Ammoniak gemischt werden, oder es kann beispielsweise zuerst ein erstes kohlenstoffhaltiges Gas mit Ammoniak gemischt werden, und danach ein zweites kohlenstoffhaltiges Gas zu der dabei erhaltenen Mischung zugemischt werden, um das Gemisch zu erhalten, welches als Grundlage für das Spaltgasgemisch dient. Beispielsweise kann - gegebenenfalls aufbereitetes - Topgas, welches ein kohlenstoffhaltiges Gas ist, zunächst mit Ammoniak gemischt werden, und danach Erdgas zugegeben werden, bevor ammoniakspaltenden Bedingungen ausgesetzt wird.

Eine Teilmenge oder das gesamte Gemisch wird zuerst bei einer Temperatur in einem Bereich mit einer Untergrenze von 350°C, bevorzugt 450°C, und einer Obergrenze von 650°C, bevorzugt 550°C, ammoniakspaltenden Bedingungen ausgesetzt, wobei ein Spaltgasgemisch entsteht,
und danach wird zumindest eine Teilmenge des Spaltgasgemisches bei einer Temperatur in einem Bereich mit einer Untergrenze von 700°C, und einer Obergrenze von 1150°C, bevorzugt 1000°C, Reformierungsbedingungen ausgesetzt.

Bezüglich des Gemischs umfassend Ammoniak und kohlenstoffhaltiges Gas ist mit dem Begriff Teilmenge eine Teilmenge des anfallenden Volumens des Gemischs gemeint. Bezüglich des Spaltgasgemischs liegt Nutzung einer Teilmenge sowohl vor, wenn bei unveränderter Zusammensetzung des Spaltgasgemisches nur eine Teilmenge des anfallenden Volumens des Spaltgasgemisches genutzt wird, als auch, wenn nicht alle Bestandteile des anfallenden Spaltgasgemisches genutzt werden - also beispielsweise, wenn eine Anreicherung oder Abreicherung eines Bestandteiles stattfindet und der entsprechend angereicherte oder abgereicherte Gasstrom vollständig oder teilweise genutzt wird.

Bevor es Reformierungsbedingungen ausgesetzt wird, kann Zugabe weiterer Gase zu dem Spaltgasgemisch - beziehungsweise seiner Teilmenge, die für die Reformierungsbedingungen vorgesehen ist -, erfolgen. Beispielsweise kann Zugabe von kohlenstoffhaltigem Gas erfolgen; beispielsweise kann dem Spaltgasgemisch Erdgas zugegeben werden. Dieses kohlenstoffhaltige Gas wird dann ebenfalls reformiert und trägt zur Gewinnung des Reduktionsgases bei.

Das Reduktionsgas ist das in das Reduktionsaggregat beziehungsweise seinen metalloxidhaltiges Material enthaltenden Innenraum - in dem die Reduktionsreaktionen stattfinden - eingeleitete Gas mit seiner bei der Einleitung vorliegenden Zusammensetzung und Temperatur. Bevor diese Zusammensetzung und Temperatur gegeben sind, liegt ein Vorläufer des Reduktionsgases vor, auf dessen Basis das Reduktionsgas zubereitet wird. Die Zubereitung kann beispielsweise durch Hinzugabe weiterer Komponenten oder Erhitzung erfolgen. Die Zubereitung kann auch durch im Vorläufer ohne äußeres Zutun ablaufende chemische Reaktionen erfolgen, welche beispielsweise die chemische Zusammensetzung beziehungsweise die Temperatur ändern.

Bei dem Reduktionsaggregat handelt es sich beispielsweise um einen Reduktionsschacht - zum Beispiel bei Durchführung eines Direktreduktionsverfahrens mit einem ein Festbett von metalloxidhaltigem Material enthaltenden Reduktionsschacht. Bei dem Reduktionsaggregat handelt es sich beispielsweise um einen Fließbettreaktor - zum Beispiel bei Durchführung eines Direktreduktionsverfahrens mit einem ein Fließbett von metalloxidhaltigem Material enthaltenden Reduktionsaggregat. Der Fließbettreaktor kann dabei auch mehrere einzelne Teilreaktoren umfassen, die beispielweise parallel oder sequenziell geschaltet sind und gemeinsam den Fließbettreaktor bilden.

Bei dem Reduktionsaggregat handelt es sich beispielsweise um einen Wirbelschichtreaktor-zum Beispiel bei Durchführung eines Direktreduktionsverfahrens mit einem eine Wirbelschicht von metalloxidhaltigem Material enthaltenden Reduktionsaggregat. Der Wirbelschichtreaktor kann dabei auch mehrere einzelne Teilreaktoren umfassen, die beispielweise parallel oder sequenziell geschaltet sind und gemeinsam den Wirbelschichtbettreaktor bilden.

Bei dem Reduktionsaggregat kann es sich auch um einen Hochofen handeln, der ein metalloxidhaltiges Material umfassendes Festbett enthält - beim Betrieb eines Hochofens kann Ammoniak beispielsweise PCI-Kohle oder fossile Reduktionsgase ersetzen.

### Vorteilhafte Wirkungen der Erfindung

Bei der Ammoniakspaltung handelt es sich um eine stark endotherme Reaktion (+93 kJ/mol). Ammoniakspaltung führt also zu starken lokalen Temperaturabsenkungen, was weder in einer Reformierungsvorrichtung noch in einem Reduktionsaggregat gewünscht ist. Daher sollen keine großen NH3-Mengen beziehungsweise NH3-Konzentrationen im Feedgas für die Reformierungsvorrichtung und Reduktionsgas zum Reduktionsschacht enthalten sein.

Reformierungsreaktionen der Dampfreformierung beziehungsweise der CO2-Reformierung (CH₄+H₂O→CO+3H₂ und CH₄+CO₂→2CO+2H₂) werden aus kinetischen und thermodynamischen Gründen mit Katalysatoren bei Temperaturen von 700-1150°C durchgeführt. Läge die Temperatur bei Ammoniakspaltung in diesem Bereich, würde das zu einem sehr schnellem Zerfall des Ammoniaks und somit zu schnellem, starken lokalen Temperaturabfall führen. Ein Temperaturabfall kann bei der Reformierung nachteilige Wirkungen wie beispielsweise verminderten Umsatz von Erdgas oder Kohlenstoffablagerungen (CO+H₂→C+H₂O oder 2CO→C+CO₂) führen.

Zwecks Vermeidung solcher nachteiliger Wechselwirkungen von Ammoniakspaltung und Reformierung erfolgt erfindungsgemäß die Ammoniakspaltung vor der Reformierung. Die erforderliche Wärme zur Aufrechterhaltung der endothermen Ammoniakspaltung wird vor der Reformierung zugeführt. Erst wenn die Ammoniakspaltung erfolgt ist, wird das resultierende Spaltgasgemisch Reformierungsbedingungen bei Temperaturen von 700-1150°C ausgesetzt.

Nach einer bevorzugten Ausführungsform wird das Gemisch erwärmt, bevor es ammoniakspaltenden Bedingungen ausgesetzt wird.

Das Gemisch vorher zu erwärmen hat den Vorteil, dass für die Ammoniakspaltung günstige Temperaturbedingungen eingestellt werden können. Die bei der Erwärmung zugeführte Energie ist dann bereits im Gemisch vorhanden.

Zur Erwärmung zugeführte Energie kann beispielsweise per Wärmetausch mit Abgas der Reformierung zugeführt werden.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Nach einer bevorzugten Ausführungsform wird das Gemisch in Strömungsrichtung des Gemischs gesehen zuerst durch einen Ammoniakspalter geleitet, und danach das dabei entstehende Spaltgasgemisch, gegebenenfalls unter Erwärmung, durch eine Reformierungsvorrichtung geleitet.

Spaltgasgemisch vor Einleitung in eine Reformierungsvorrichtung zu erwärmen hat den Vorteil, dass für die Reformierung günstige Temperaturbedingungen eingestellt werden können. Die bei der Erwärmung zugeführte Energie ist dann bereits bei Einleitung in die Reformierungsvorrichtung im Spaltgasgemisch vorhanden, und muss nicht in der Reformierungsvorrichtung zugeführt werden.

Zur Erwärmung zugeführte Energie kann beispielsweise per Wärmetausch mit Abgas der Reformierung zugeführt werden.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Nach einer anderen bevorzugten Ausführungsform wird das Gemisch durch zumindest ein Rohr geleitet, welches sowohl Katalysatormaterial für Ammoniakspaltung als auch Katalysatormaterial für Reformierung enthält, wobei in Strömungsrichtung des Gemischs gesehen das Katalysatormaterial für Ammoniakspaltung vor dem Katalysatormaterial für Reformierung angeordnet ist.

Nach einer Ausführungsform wird bei der Zubereitung des Gemischs das kohlenstoffhaltige Gas erwärmt und erfolgt danach Zugabe von Ammoniak. Dabei kann Ammoniak vorher auch schon erwärmt worden sein, beispielsweise per Wärmetausch mit Abgas der Reformierung.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Nach einer Ausführungsform wird bei der Zubereitung des Gemischs der Ammoniak erwärmt und danach dem kohlenstoffhaltigen Gas zugegeben. Beispielsweise kann der Ammoniak per Wärmetausch mit Abgas der Reformierung erwärmt werden. Dabei kann das kohlenstoffhaltige Gas vorher auch schon erwärmt worden sein, beispielsweise per Wärmetausch mit Abgas der Reformierung.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Bei der Reduktion von metalloxidhaltigem Material fällt ein Topgas an, das, zumindest teilweise, bei der Gewinnung des Reduktionsgases genutzt werden kann, gegebenenfalls nach einer Aufbereitung. Die Aufbereitung ist beispielsweise eine Entstaubung, Kühlung, eine Verminderung des Wasserdampfgehaltes und/oder Einstellung des Wasserdampfgehaltes, eine Anreicherung oder eine Abreicherung von Bestandteilen.

Aus dem Reduktionsaggregat wird ein Topgas ausgeleitet. Das Topgas entsteht aus dem Reduktionsgas beim Durchströmen des Reduktionsaggregats aufgrund der im Reduktionsaggregat stattfindenden Reaktionen seiner Komponenten mit dem metalloxidhaltigen Material beziehungsweise den bei diesen Reaktionen entstehenden Produkten, beispielsweise dem entstehenden metallischen Eisen. Das Topgas besitzt infolge der im Reduktionsaggregat stattgefundenen Reduktionsreaktionen weniger Reduktionskraft als das Reduktionsgas. Eine Teilmenge oder das gesamte Topgas kann - gegebenenfalls nach einer Aufbereitung - als Komponente bei der Zubereitung des Reduktionsgases genutzt werden. Nutzung einer Teilmenge liegt sowohl vor, wenn bei unveränderter Zusammensetzung des Topgases nur eine Teilmenge des anfallenden Topgasvolumens genutzt wird, als auch, wenn nicht alle Bestandteile des anfallenden Topgases genutzt werden - also beispielsweise, wenn eine Anreicherung eines Bestandteiles - beispielsweise Anreicherung von Wasserstoff - stattfindet und der entsprechend angereicherte Gasstrom vollständig oder teilweise genutzt wird.

Nach einer bevorzugten Ausführungsform erfolgt die Aufbereitung ohne Verminderung des Kohlendioxidgehalts.

Nach einer bevorzugten Ausführungsform wird bei der Aufbereitung der Stickstoffgehalt vermindert. Dazu kann beispielsweise eine Vorrichtung zur Abtrennung von Stickstoff N₂ genutzt werden.

Wenn nur eine Teilmenge des Topgases zur Gewinnung des Reduktionsgases genutzt wird, wird die Menge des Stickstoffs, der ins durch Rezirkulierung Reduktionsgas gelangt, dadurch reduziert, dass entsprechend nicht der gesamte im Topgas enthaltene Stickstoff ins Reduktionsgas gelangt. Topgas, das nicht als Komponente bei der Zubereitung von Topgas genutzt wird, kann beispielsweise als Brennstoffkomponente für Brenner der Reformierungsvorrichtung genutzt werden.

Nach einer bevorzugten Ausführungsform erfolgt zur Schaffung von Reformierungsbedingungen Energiezufuhr zumindest teilweise mittels elektrischer Beheizung. Es kann stattdessen oder zusätzlich auch Abwärme aus dem Reduktionsaggregat genutzt werden, oder Abwärme aus einem zum Aufschmelzen des Produktes der Reduktion genutzten Schmelzaggregat, oder Wärme aus dem Topgas, beziehungsweise mittels solcher Wärmequellen erzeugter Dampf.

Nach einer bevorzugten Ausführungsform erfolgt zur Schaffung von ammoniakspaltenden Bedingungen Energiezufuhr zumindest teilweise mittels elektrischer Beheizung. Es kann stattdessen oder zusätzlich auch Abwärme aus dem Reduktionsaggregat genutzt werden, oder Abwärme aus einem zum Aufschmelzen des Produktes der Reduktion genutzten Schmelzaggregat, oder Wärme aus dem Topgas, beziehungsweise mittels solcher Wärmequellen erzeugter Dampf.

Nach einer bevorzugten Ausführungsform wird der Ammoniakspaltung Wärme zugeführt, welche dem Topgas entzogen wird.

Nach einer bevorzugten Ausführungsform sind die Mengenverhältnisse von Ammoniak und kohlenstoffhaltigem Gas im Gemisch veränderbar.

Bei der Gewinnung von Reduktionsgas kann auch Zugabe von Wasserstoff H₂ in einen Vorläufer des Reduktionsgases erfolgen. Nach einer anderen bevorzugten Ausführungsform sind die Mengenverhältnisse von Ammoniak und Wasserstoff im Reduktionsgas veränderbar. Beispielsweise kann die Zugabe von Wasserstoff H₂ vergrößert oder vermindert werden, oder die Menge des eingesetzten Ammoniaks kann vergrößert oder vermindert werden.

Zur Unterstützung endothermer Spaltungsreaktionen des Ammoniaks - beispielsweise in einem gegebenenfalls vorhandenen Ammoniakspalter oder in einem Rohr enthaltend sowohl Katalysatormaterial für Ammoniakspaltung als auch Katalysatormaterial für Reformierung - kann beispielsweise bei Reformierung anfallende Wärme genutzt werden. Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Bei Reformierung anfallende Wärme ist beispielsweise Abwärme aus der Reformierung. Unter bei Reformierung anfallender Wärme ist beispielsweise zu verstehen: bei der Reformierung fällt ein heißes Abgas an, beispielsweise infolge Wärme zur Durchführung der Reformierung liefernder, mittels Brennern durchgeführter Verbrennungsprozesse; das heiße Abgas - welches Abwärme aus der Reformierung beinhaltet - kann so genutzt werden, dass seine Wärme - also Abwärme aus der Reformierung - für die Ammoniakspaltung eingesetzt wird.

Abwärme kann durch Wärmestrahlung und/oder Konvektion der Ammoniakspaltung zugeführt werden, beispielsweise wenn eine Vorrichtung zur Ammoniakspaltung in Teilen einer Reformierungsvorrichtung integriert ist.

Zur Unterstützung endothermer Reformierungsreaktionen kann beispielsweise bei Reformierung anfallende Wärme genutzt werden. Die Nutzung kann dergestalt sein, dass den Reformierungsreaktionen zu unterwerfendes Gas erwärmt wird, also beispielsweise Spaltgasgemisch.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Bei Reformierung anfallende Wärme ist beispielsweise Abwärme aus der Reformierung. Unter bei Reformierung anfallender Wärme ist beispielsweise zu verstehen: bei der Reformierung fällt ein heißes Abgas an, beispielsweise infolge Wärme zur Durchführung der Reformierung liefernder, mittels Brennern durchgeführter Verbrennungsprozesse; das heiße Abgas - welches Abwärme aus der Reformierung beinhaltet - kann so genutzt werden, dass seine Wärme - also Abwärme aus der Reformierung - eingesetzt wird. Abwärme kann durch Wärmestrahlung und/oder Konvektion der zugeführt werden.

Nach einer Variante wird für Reformierungsbedingungen vorgesehenes Spaltgasgemisch erwärmt, bevor es Reformierungsbedingungen ausgesetzt wird. Dadurch kann vermieden werden, dass es zu kalt in die Reformierungsvorrichtung eintritt, und es deshalb zu Kohlenstoffablagerungen kommt. Für diese Erwärmung kann beispielsweise Abwärme aus der Reformierungsvorrichtung genutzt werden. Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Wenn bei der Reformierung durch Brenner Wärme zugeführt wird, fällt dabei ein Rauchgas an. Rauchgas, oder aus Rauchgas gewonnenes Sealgas - ein Inertgas mit einer Zusammensetzung von beispielsweise etwa 78% N2, 20% CO2, 1% O2, 1% H2O-können einen Beitrag zur Erwärmung auf die zur Ammoniakspaltung NH₃ notwendige Temperatur liefern. Nach einer Ausführungsform wird der Ammoniakspaltung zugeführte Wärme zumindest teilweise vom Rauchgas geliefert.

Als Ergebnis der Reformierungsbedingungen wird ein sogenanntes Reformierungsgas gewonnen, welches das Reduktionsgas sein kann oder ein Vorläufer des Reduktionsgases.

Nach einer Variante wird dem Reformierungsgas Ammoniak zugegeben. Dieser Ammoniak kann zusätzlich zu den im Reformierungsgas vorhandenen reduzierenden Komponenten zur Reduktionskraft des Reduktionsgases beitragen.

Vorzugsweise wird aber die Hauptmenge des zur Gewinnung des Reduktionsgases verwendeten Ammoniaks zur Erzeugung des Spaltgasgemischs verwendet, und nur ein kleiner Teil der gesamten Ammoniakmenge dem Reformierungsgas zugegeben.

Das Reformierungsgas kann auch Ammoniak enthalten, weil - wie vorab erwähnt - beispielsweise das Spaltgasgemisch noch Ammoniak enthalten kann.

Dieser Ammoniakgehalt kann durch Zugabe von Ammoniak in das Reformierungsgas erhöht werden.

Nach einer Variante wird dem Reduktionsaggregat, in dem die Reduktion des metalloxidhaltigen Materials erfolgt, Ammoniak zugegeben - zusätzlich zur Einleitung des Reduktionsgases; nach einer Ausführungsform unabhängig von der Einleitung des Reduktionsgases. Dieser Ammoniak kann zusätzlich zum Reduktionsgas zur Reduktion beitragen.

Vorzugsweise wird aber die Hauptmenge des verwendeten Ammoniaks zur Erzeugung des Spaltgasgemischs verwendet, und nur ein kleiner Teil der gesamten Ammoniakmenge dem Reduktionsaggregat zugegeben.

Die NH3-Konzentration im Reduktionsgas sollte 8 Vol% nicht übersteigen, besonders bevorzugt 5 Vol% nicht übersteigen.

Nach einer Variante wird der dem Reformierungsgas und/oder der dem Reduktionsaggregat zugegebene Ammoniak erwärmt. Dazu kann beispielsweise Abwärme aus der Reformierung genutzt werden. Beispielsweise können dafür Leitungsabschnitte in einem Wärmetauscher genutzt werden, die auch für die Erwärmung von Topgas-Brennstoff per Wärmetausch mit Abwärme aus der Reformierungsvorrichtung genutzt werden können. Topgas-Brennstoff ist eine Teilmenge des Topgases, die - gegebenenfalls nach Aufbereitung - als Komponente des Brennstoffs der in einer Reformierungsvorrichtung betriebenen Brenner genutzt wird.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Vorzugsweise wird an dem Spaltgasgemisch beziehungsweise an der Teilmenge des Spaltgasgemisch, die für Reformierung vorgesehen sind, keine Verminderung des Ammoniakgehaltes - beispielsweise in einem NH₃-Absorber oder einem sogenannten NH₃-Stripper - vorgenommen - die Zuführung des Spaltgasgemisches zur Reformierung erfolgt diesbezüglich direkt.

Ein weiterer Gegenstand der Erfindung ist eine
Vorrichtung zur Reduktion von metalloxidhaltigem Material,
umfassend:
   - ein Reduktionsaggregat,
   - eine in das Reduktionsaggregat mündende Reduktionsgaseinleitung,
   - eine Zuleitung für kohlenstoffhaltiges Gas,
   - eine Ammoniakzuleitung,
dadurch gekennzeichnet, dass
die Zuleitung für kohlenstoffhaltiges Gas und die Ammoniakzuleitung in eine Gemischleitung münden,
und die Gemischleitung in eine Vorrichtung zur Ammoniakspaltung mündet,
und von der Vorrichtung zur Ammoniakspaltung eine Spaltgasgemischleitung ausgeht, welche in eine Reformierungsvorrichtung mündet,
und von der Reformierungsvorrichtung eine Reformierungsgasleitung ausgeht, welche in die Reduktionsgaseinleitung mündet.

Mittels einer solchen Vorrichtung kann ein erfindungsgemäßes Verfahren durchgeführt werden.

Bestehende Vorrichtungen zur Reduktion von metalloxidhaltigem Material umfassend eine Reformierungsvorrichtung lassen sich einfach auf eine erfindungsgemäße Vorrichtung umrüsten, wodurch sie fähig werden, ein erfindungsgemäßes Verfahren durchzuführen.

Es kann ein Reduktionsaggregat vorhanden sein oder mehrere Reduktionsaggregate.

Es kann eine Reduktionsgaseinleitung vorhanden sein oder mehrere Reduktionsgaseinleitungen.

Es kann eine Zuleitung für kohlenstoffhaltiges Gas vorhanden sein oder mehrere Zuleitungen für kohlenstoffhaltiges Gas.

Es kann eine Ammoniakzuleitung vorhanden sein oder mehrere Ammoniakzuleitungen.

Es kann eine Gemischleitung vorhanden sein oder mehrere Gemischleitungen.

Es kann eine Vorrichtung zur Ammoniakspaltung vorhanden sein oder mehrere Vorrichtungen zur Ammoniakspaltung.

Es kann eine Spaltgasgemischleitung vorhanden sein oder mehrere Spaltgasgemischleitungen.

Es kann eine Reformierungsvorrichtung vorhanden sein oder mehrere Reformierungsvorrichtungen.

Es kann eine Reformierungsgasleitung vorhanden sein oder mehrere Reformierungsgasleitungen.

Im Reduktionsaggregat wird metalloxidhaltiges Material mittels eines Reduktionsgases reduziert.

Das Reduktionsgas wird über die Reduktionsgaseinleitung in das Reduktionsaggregat eingeleitet.

Die Zuleitung für kohlenstoffhaltiges Gas führt kohlenstoffhaltiges Gas. Nach einer Ausführungsform ist in der Zuleitung für kohlenstoffhaltiges Gas eine Erwärmungsvorrichtung zur Erwärmung des kohlenstoffhaltigen Gases vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Die Ammoniakzuleitung führt Ammoniak - rein oder in einer ammoniakhaltigen Gasmischung. Nach einer Ausführungsform ist in der Ammoniakzuleitung eine Erwärmungsvorrichtung zur Erwärmung des Ammoniaks vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Die Zuleitung für kohlenstoffhaltiges Gas und die Ammoniakzuleitung münden in eine Gemischleitung. Die Gemischleitung dient zur Leitung eines Gemischs aus kohlenstoffhaltigem Gas und Ammoniak. Die Gemischleitung kann einen Gasmischerbereich umfassen; nach einer Variante münden die Zuleitung für kohlenstoffhaltiges Gas und die Ammoniakzuleitung in den Gasmischerbereich, wo mittels eines Gasmischers gemischt wird, und dabei erhaltenes Gemisch wird in der Gemischleitung weitergeleitet.

Nach einer Ausführungsform ist in der Gemischleitung eine Erwärmungsvorrichtung zur Erwärmung des Gemischs vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Die Gemischleitung mündet in eine Vorrichtung zur Ammoniakspaltung - der Vorrichtung zur Ammoniakleitung wird also über die Gemischleitung Gemisch zugeführt. In der Vorrichtung zur Ammoniakspaltung herrschen bei einer Temperatur in einem Bereich mit einer Untergrenze von 350°C, bevorzugt 450°C, und einer Obergrenze von 650°C, bevorzugt 550°C, ammoniakspaltende Bedingungen. Zumindest eine Teilmenge des Ammoniaks im Gemisch wird in der Vorrichtung zur Ammoniakspaltung gespalten. Von der Vorrichtung zur Ammoniakspaltung geht eine Spaltgasgemischleitung aus.

Nach einer Ausführungsform ist in der Spaltgasgemischleitung eine Erwärmungsvorrichtung zur Erwärmung des Spaltgasgemischs vorhanden; beispielsweise ein Wärmetauscher, beispielsweise zum Wärmetausch mit Abgas der Reformierung.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Nach einer Ausführungsform ist in der Spaltgasgemischleitung keine Vorrichtung zur Verminderung des Ammoniakgehaltes vorhanden.

Nach einer Ausführungsform ist in Gasstromrichtung in Richtung Reduktionsaggregat nach der Vorrichtung zur Ammoniakspaltung keine Vorrichtung zur Verminderung des Ammoniakgehaltes vorhanden.

Nach einer Ausführungsform umfasst die Vorrichtung zur Ammoniakspaltung eine elektrische Beheizungsvorrichtung. Eine elektrische Beheizungsvorrichtung beheizt mittels elektrischer Energie.

Es kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Nach einer Ausführungsform umfasst die Vorrichtung zur Ammoniakspaltung einen Wärmetauscher zum Wärmetausch mit Rauchgas aus der Reformierungsvorrichtung. Wenn in der Reformierungsvorrichtung Brenner zur Wärmezufuhr genutzt werden, fällt ein Rauchgas an. Das Rauchgas kann über eine Rauchgasausleitung aus der Reformierungsvorrichtung ausgeleitet werden. Wärme aus dem Rauchgas kann durch Führung der Rauchgasausleitung durch einen Wärmetauscher der Vorrichtung zur Ammoniakspaltung bei der Spaltung des Ammoniaks genutzt werden. Nach einer Ausführungsform kann heißes Rauchgas durch die Vorrichtung zur Ammoniakspaltung geführt werden; wenn beispielsweise in der Vorrichtung zur Ammoniakspaltung mit Katalysator gefüllte Rohre von Gemisch durchströmt werden, kann Rauchgas um diese Rohre herumgeführt werden, um Wärme zu übertragen.

Auch nutzbar zur Wärmezufuhr zur Vorrichtung zur Ammoniakspaltung sind Abwärme aus dem Reduktionsaggregat, oder Abwärme aus einem zum Aufschmelzen des Produktes der Reduktion genutzten Schmelzaggregat, oder Wärme aus dem Topgas.

Es kann stattdessen oder zusätzlich auch elektrische Energie, Abwärme aus dem Reduktionsaggregat, Abwärme aus einem zum Aufschmelzen des Produktes der Reduktion genutzten Schmelzaggregat, Wärme aus dem Topgas, beziehungsweise mittels solcher Wärmequellen erzeugter Dampf genutzt werden.

Die Spaltgasgemischleitung mündet in eine Reformierungsvorrichtung - der Reformierungsvorrichtung wird also über die Spaltgasgemischleitung in der Vorrichtung zur Ammoniakspaltung entstehendes Spaltgasgemisch zugeführt. In der Reformierungsvorrichtung herrschen bei einer Temperatur in einem Bereich mit einer Untergrenze von 700°C und einer Obergrenze von 1150°C, bevorzugt 1000°C, Reformierungsbedingungen. Zumindest eine Teilmenge des kohlenstoffhaltigen Gases im Spaltgasgemisch wird in der Reformierungsvorrichtung reformiert. In der Reformierungsvorrichtung wird Reformierungsgas gewonnen. Von der Reformierungsvorrichtung geht eine Reformierungsgasleitung aus.

Nach einer Ausführungsform umfasst die Reformierungsvorrichtung eine elektrische Beheizungsvorrichtung.

Es kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Nach einer Ausführungsform ist die Vorrichtung zur Ammoniakspaltung als Ammoniakspalter ausgeführt; ein Ammoniakspalter ist ein von einer Reformierungsvorrichtung separates Gerät.

Nach einer Ausführungsform ist die Vorrichtung zur Ammoniakspaltung ausgeführt integriert in Teilen der Reformierungsvorrichtung.

Eine Reformierungsvorrichtung ist beispielsweise ein mehrere Katalysatormaterial für Reformierung enthaltende Rohre umfassender Reformer. Die Vorrichtung zur Ammoniakspaltung kann dann beispielweise in Teilen der Reformierungsvorrichtung integriert sein, indem Rohre des Reformers sowohl Katalysatormaterial für Ammoniakspaltung als auch Katalysatormaterial für Reformierung enthalten, wobei in Strömungsrichtung des Gemischs gesehen das Katalysatormaterial für Ammoniakspaltung vor dem Katalysatormaterial für Reformierung angeordnet ist.

Nach einer Ausführungsform umfasst die Vorrichtung zur Reduktion von metalloxidhaltigem Material eine Topgasausleitung zur Ausleitung von Topgas aus dem Reduktionsaggregat.

Nach einer bevorzugten Ausführungsform mündet die Topgasausleitung in die Zuleitung für kohlenstoffhaltiges Gas.

Nach einer Ausführungsform enthält die Topgasausleitung zumindest eine Aufbereitungsvorrichtung. Mittels einer Aufbereitungsvorrichtung wird durchgeführt beispielsweise Entstaubung, Kühlung, eine Verminderung des Wasserdampfgehaltes und/oder Einstellung des Wasserdampfgehaltes, Anreicherung oder Abreicherung von Bestandteilen.

Vorzugsweise enthält die Topgasausleitung keine Vorrichtung zur Verminderung des Kohlendioxidgehalts.

Vorzugsweise enthält die Topgasausleitung zumindest eine Vorrichtung zur Abtrennung von Stickstoff N₂.

Vorzugsweise geht von der Topgasausleitung zumindest eine Brennstoffleitung zur Lieferung von Topgas als Brennstoffkomponente für Brenner der Reformierungsvorrichtung aus.

Nach einer bevorzugten Ausführungsform umfasst die Vorrichtung zur Reduktion von metalloxidhaltigem Material eine Vorrichtung zur Steuerung und/oder Regelung der Mengenverhältnisse von Ammoniak und kohlenstoffhaltigem Gas im Gemisch. Eine derartige Vorrichtung umfasst Sensoren zur Ermittlung des Gehalts von Ammoniak und kohlenstoffhaltigem Gas im Gemisch.

Nach einer bevorzugten Ausführungsform umfasst die Vorrichtung zur Reduktion von metalloxidhaltigem Material eine Vorrichtung zur Steuerung und/oder Regelung der Mengenverhältnisse von Ammoniak und Wasserstoff im Reduktionsgas. Eine derartige Vorrichtung umfasst Sensoren zur Ermittlung des Gehalts von Ammoniak und Wasserstoff im Reduktionsgas.

Nach einer bevorzugten Ausführungsform umfasst die Vorrichtung zur Reduktion von metalloxidhaltigem Material zumindest eine Wasserstoffzugabeleitung zur Zugabe von Wasserstoff H₂ in die Reformierungsgasleitung. Die Wasserstoffzugabeleitung mündet in die Reformierungsgasleitung.

Nach einer bevorzugten Ausführungsform umfasst die Vorrichtung zur Reduktion von metalloxidhaltigem Material zumindest eine Ammoniakzugabeleitung zur Zugabe von Ammoniak in die Reformierungsgasleitung. Die Ammoniakzugabeleitung mündet in die Reformierungsgasleitung.

Nach einer bevorzugten Ausführungsform umfasst die Vorrichtung zur Reduktion von metalloxidhaltigem Material zumindest eine Ammoniakzufuhrleitung zur Zugabe von Ammoniak in das Reduktionsaggregat - zusätzlich zur Einleitung des Reduktionsgases beziehungsweise zusätzlich zur Reduktionsgaseinleitung; diese Zugabe von Ammoniak in das Reduktionsaggregat kann unabhängig von der Einleitung des Reduktionsgases erfolgen. Die Ammoniakzufuhrleitung mündet in das Reduktionsaggregat.

Nach einer Variante ist in der Ammoniakzufuhrleitung eine Erwärmungsvorrichtung zur Erwärmung des Ammoniaks vorhanden; beispielsweise ein Wärmetauscher, beispielsweise zum Wärmetausch mit Abgas der Reformierung. Dabei können zur Nutzung der Abwärme aus der Reformierung beispielsweise Leitungsabschnitte in einem Wärmetauscher genutzt werden, die auch für die Erwärmung von Topgas-Brennstoff per Wärmetausch mit Abwärme aus dem Reformer genutzt werden können.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt.

Ein weiterer Gegenstand der vorliegenden Anmeldung ist eine Signalverarbeitungseinrichtung mit einem maschinenlesbaren Programmcode, dadurch gekennzeichnet, dass er Steuer und/oder Regelbefehle zur Durchführung eines erfindungsgemäßen Verfahrens aufweist. Bei einem weiteren Gegenstand handelt es sich um eine Signalverarbeitungseinrichtung zur Durchführung eines Verfahrens nach einem der Ansprüche 1 bis 8.

Ein weiterer Gegenstand der vorliegenden Anmeldung ist ein maschinenlesbarer Programmcode für eine Signalverarbeitungseinrichtung, dadurch gekennzeichnet, dass der Programmcode Steuer und/oder Regelbefehle aufweist, welche die Signalverarbeitungseinrichtung zur Durchführung eines erfindungsgemäßen Verfahrens veranlassen. Bei einem weiteren Gegenstand handelt es sich um ein Computerprogrammprodukt umfassend Befehle für eine Signalverarbeitungseinrichtung, die bei der Ausführung des Programms für die Signalverarbeitungsvorrichtung diese veranlassen, das Verfahren nach einem der Ansprüche 1 bis 8 durchzuführen.

Ein weiterer Gegenstand der vorliegenden Anmeldung ist ein Speichermedium mit einem darauf gespeicherten erfindungsgemäßen maschinenlesbaren Programmcode. Bei einem weiteren Gegenstand handelt es sich um ein Speichermedium mit einem darauf gespeicherten Computerprogramm zur Durchführung eines Verfahrens nach einem der Ansprüche 1 bis 8.

### Kurze Beschreibung der Zeichnungen

Nachfolgend wird die vorliegende Erfindung anhand mehrerer schematischer Figuren beispielhaft beschrieben.
Figur 1 zeigt schematisch die Durchführung einer Variante des erfindungsgemäßen Verfahrens in einer Variante der erfindungsgemäßen Vorrichtung zur Reduktion von metalloxidhaltigem Material.
Figuren 2 zeigt schematisch eine weitere Variante.
Figuren 3 zeigt eine weitere Variante.
Figur 4 zeigt schematisch eine weitere Variante.
Figur 5 zeigt schematisch eine weitere Variante.

### Beschreibung der Ausführungsformen

### Beispiele

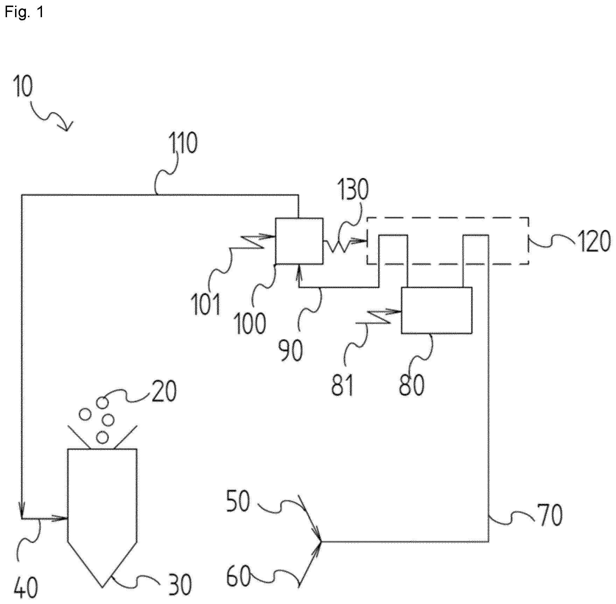

Figur 1 zeigt schematisch eine Vorrichtung zur Reduktion 10 von metalloxidhaltigem Material 20. Metalloxidhaltiges Material 20 wird in das Reduktionsaggregat 30 eingegeben. Reduktionsgas wird über die in das Reduktionsaggregat 30 mündende Reduktionsgaseinleitung 40 eingeleitet, um das metalloxidhaltige Material 20 zu reduzieren. Das Reduktionsgas wird unter Nutzung von Ammoniak NH₃ und unter Nutzung von kohlenstoffhaltigem Gas gewonnen. Dazu wird ein Gemisch umfassend Ammoniak und kohlenstoffhaltiges Gas zubereitet. Dazu münden die Zuleitung 50 für kohlenstoffhaltiges Gas und die Ammoniakzuleitung 60 in eine Gemischleitung 70. Die Gemischleitung 70 mündet in eine Vorrichtung zur Ammoniakspaltung 80. In der Vorrichtung zur Ammoniakspaltung 80 wird zumindest eine Teilmenge des Gemischs bei einer Temperatur in einem Bereich mit einer Untergrenze von 350°C, bevorzugt 450°C, und einer Obergrenze von 650°C, bevorzugt 550°C, ammoniakspaltenden Bedingungen ausgesetzt. Dabei entsteht ein Spaltgasgemisch. Von der Vorrichtung zur Ammoniakspaltung geht die Spaltgasgemischleitung 90 aus, die in die

Reformierungsvorrichtung 100 mündet. Zumindest eine Teilmenge des Spaltgasgemisches wird in der Reformierungsvorrichtung 100 bei einer Temperatur in einem Bereich mit einer Untergrenze von 700°C und einer Obergrenze von 1150°C, bevorzugt 1000°C, Reformierungsbedingungen ausgesetzt. Das dabei erzeugte Reformierungsgas wird über die von der Reformierungsvorrichtung 100 ausgehende Reformierungsgasleitung 110 in die Reduktionsgaseinleitung 40 geleitet. Die Reformierungsgasleitung 110 mündet in die Reduktionsgaseinleitung 40.

In der Zuleitung 50 für kohlenstoffhaltiges Gas kann eine Erwärmungsvorrichtung zur Erwärmung des kohlenstoffhaltigen Gases vorhanden sein, was zur besseren Übersichtlichkeit aber nicht extra dargestellt ist.

Die Ammoniakzuleitung 60 führt Ammoniak. Nach einer Ausführungsform ist in der Ammoniakzuleitung eine Erwärmungsvorrichtung zur Erwärmung des Ammoniaks vorhanden, was zur besseren Übersichtlichkeit aber nicht extra dargestellt ist.

Die Zuleitung 50 für kohlenstoffhaltiges Gas und die Ammoniakzuleitung 60 münden in eine Gemischleitung 70. Die Gemischleitung 70 kann einen Gasmischerbereich umfassen; was zur besseren Übersichtlichkeit aber nicht extra dargestellt ist. Die Gemischleitung 70 mündet in eine Vorrichtung zur Ammoniakspaltung 80 - der Vorrichtung zur Ammoniakspaltung 80 wird also über die Gemischleitung 70 Gemisch zugeführt. Zumindest eine Teilmenge des Ammoniaks im Gemisch wird in der Vorrichtung zur Ammoniakspaltung 80 gespalten. Von der Vorrichtung zur Ammoniakspaltung 80 geht eine Spaltgasgemischleitung 90 aus.

Die Vorrichtung zur Ammoniakspaltung 80 kann eine elektrische Beheizungsvorrichtung 81 umfassen; die optional vorhandene elektrische Beheizungsvorrichtung 81 ist schematisch dargestellt durch einen Blitz.

Optional kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt, was zur besseren Übersichtlichkeit aber nicht extra dargestellt ist.

Optional kann die Vorrichtung zur Ammoniakspaltung auch zusätzlich oder stattdessen einen Wärmetauscher zum Wärmetausch mit Rauchgas aus der Reformierungsvorrichtung umfassen, was zur besseren Übersichtlichkeit aber nicht extra dargestellt ist.

In der Gemischleitung 70 kann optional eine Erwärmungsvorrichtung zur Erwärmung des Gemischs vorhanden sein; das ist in Figur 1 als optional vorhandener und daher strichliert umrandeter Wärmetauscher 120 zum Wärmetausch mit Abgas 130 der Reformierung - dargestellt als gezackter Pfeil - dargestellt.

In der Spaltgasgemischleitung 90 kann optional eine Erwärmungsvorrichtung zur Erwärmung des Spaltgasgemischs vorhanden sein; das ist in Figur 1 als optional vorhandener und daher strichliert umrandeter Wärmetauscher 120 zum Wärmetausch mit Abgas 130 der Reformierung - dargestellt als gezackter Pfeil - dargestellt.

In der Spaltgasgemischleitung 90 ist keine Vorrichtung zur Verminderung des Ammoniakgehaltes vorhanden.

In der Vorrichtung zur Reduktion 10 von metalloxidhaltigem Material 20 ist in Gasstromrichtung in Richtung Reduktionsaggregat 30 nach der Vorrichtung zur Ammoniakspaltung 80 keine Vorrichtung zur Verminderung des Ammoniakgehaltes vorhanden.

Die Reformierungsvorrichtung 100 kann eine elektrische Beheizungsvorrichtung 101 umfassen; die optional vorhanden elektrische Beheizungsvorrichtung 101 ist schematisch dargestellt durch einen Blitz.

Es kann stattdessen oder zusätzlich auch eine Beheizungsvorrichtung vorhanden sein, die zur Beheizung Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt, was zur besseren Übersichtlichkeit aber nicht extra dargestellt ist.

In Figur 1 ist die Vorrichtung zur Ammoniakspaltung 80 als ein von einer Reformierungsvorrichtung 100 separates Gerät Ammoniakspalter ausgeführt.

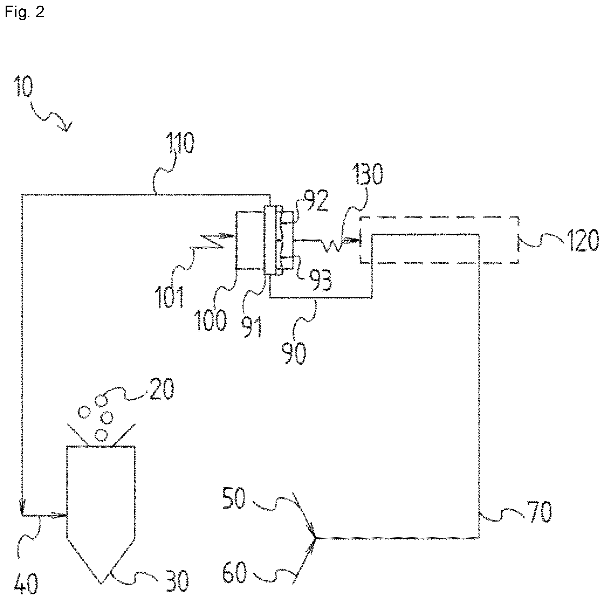

Figur 2 zeigt eine mit Figur 1 weitgehend identische Ausführung, die sich in der Ausführung der Vorrichtung zur Ammoniakspaltung 80 unterscheidet. Schematisch dargestellt ist eine Ausführung der Vorrichtung zur Ammoniakspaltung 80 als integriert in Teilen der Reformierungsvorrichtung 100. Die Reformierungsvorrichtung 100 ist ein mehrere Katalysatormaterial für Reformierung enthaltende Rohre umfassender Reformer, ein Rohr 91 ist dargestellt. Im oberen Bereich 92 des Rohres 91 ist Katalysatormaterial für Reformierung enthalten, im unteren Bereich 93 des Rohres ist Katalysatormaterial für Ammoniakspaltung enthalten. In Strömungsrichtung des Gemischs in Richtung Reduktionsaggregat 30 gesehen ist das Katalysatormaterial für Ammoniakspaltung vor dem Katalysatormaterial für Reformierung angeordnet.

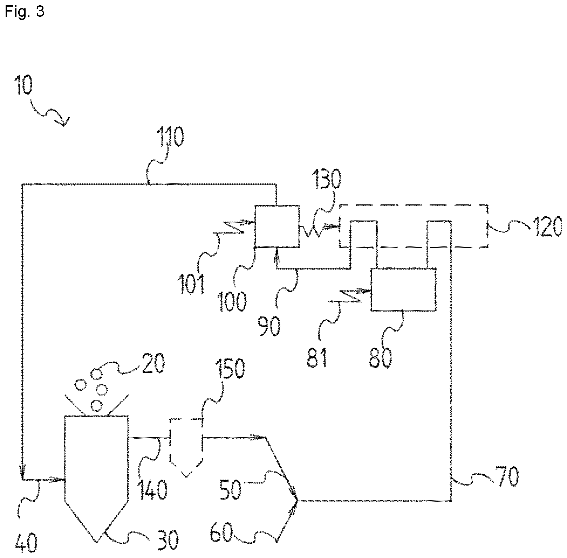

Figur 3 zeigt eine mit Figur 1 weitgehend identische Ausführung, zusätzlich ist eine Variante gezeigt, bei der eine Topgasausleitung 140 zur Ausleitung von Topgas aus dem Reduktionsaggregat 30 vorhanden ist. Die Topgasausleitung 140 mündet in die Zuleitung 50 für kohlenstoffhaltiges Gas. Dargestellt ist auch eine optional - und daher strichliert gezeichnet - vorhandene Aufbereitungsvorrichtung 150, im dargestellten Fall eine Entstaubungsvorrichtung. Die Topgasausleitung 140 enthält keine Vorrichtung zur Verminderung des Kohlendioxidgehalts.

Die Topgasausleitung 140 kann eine Vorrichtung zur Abtrennung von Stickstoff N₂ enthalten, was zur besseren Übersichtlichkeit aber nicht extra dargestellt ist.

Von der Topgasausleitung kann eine Brennstoffleitung zur Lieferung von Topgas als Brennstoffkomponente für Brenner der Reformierungsvorrichtung 100 ausgehen, was zur besseren Übersichtlichkeit aber nicht extra dargestellt ist.

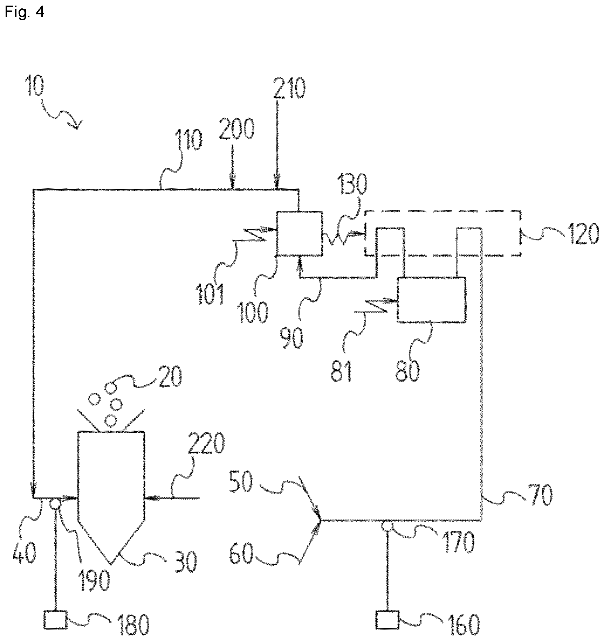

Figur 4 zeigt eine mit Figur 1 weitgehend identische Ausführung.

Auf die zusätzlich dargestellten Merkmale wird nun eingegangen:
- die Vorrichtung zur Reduktion 10 von metalloxidhaltigem Material 20 umfasst auch eine Vorrichtung zur Steuerung und/oder Regelung 160 der Mengenverhältnisse von Ammoniak und kohlenstoffhaltigem Gas im Gemisch. Dargestellt ist auch ihr Sensor 170 zur Ermittlung des Gehalts von Ammoniak und kohlenstoffhaltigem Gas im Gemisch.
- die Vorrichtung zur Reduktion 10 von metalloxidhaltigem Material 20 umfasst auch eine Vorrichtung zur Steuerung und/oder Regelung 180 der Mengenverhältnisse von Ammoniak und Wasserstoff im Reduktionsgas. Dargestellt ist auch ihr Sensor 190 zur Ermittlung des Gehalts von Ammoniak und Wasserstoff im Reduktionsgas.
- die Vorrichtung zur Reduktion 10 von metalloxidhaltigem Material 20 umfasst auch eine Wasserstoffzugabeleitung 200 zur Zugabe von Wasserstoff H₂ in die Reformierungsgasleitung 110. Die Wasserstoffzugabeleitung 200 mündet in die Reformierungsgasleitung 110.
- die Vorrichtung zur Reduktion 10 von metalloxidhaltigem Material 20 umfasst auch eine Ammoniakzugabeleitung 210 zur Zugabe von Ammoniak in die Reformierungsgasleitung 110. Die Ammoniakzugabeleitung 210 mündet in die Reformierungsgasleitung 110.
- die Vorrichtung zur Reduktion 10 von metalloxidhaltigem Material 20 umfasst auch eine Ammoniakzufuhrleitung 220 zur Zugabe von Ammoniak in das Reduktionsaggregat 30. Die Ammoniakzufuhrleitung 220 mündet in das Reduktionsaggregat 30, zusätzlich zur Reduktionsgaseinleitung 40; Zugabe von Ammoniak in das Reduktionsaggregat über die Ammoniakzufuhrleitung 220 erfolgt unabhängig von der Einleitung des Reduktionsgases in das Reduktionsaggregat 30.

In der Ammoniakzufuhrleitung 220 kann eine Erwärmungsvorrichtung zur Erwärmung des Ammoniaks vorhanden sein; beispielsweise ein Wärmetauscher, beispielsweise zum Wärmetausch mit Abgas der Reformierung. Dabei können zur Nutzung der Abwärme aus der Reformierung beispielsweise Leitungsabschnitte in einem Wärmetauscher genutzt werden, die auch für die Erwärmung von Topgas-Brennstoff per Wärmetausch mit Abwärme aus dem Reformer genutzt werden können.

Auch nutzbar sind Abwärme aus dem Reduktionsaggregat, oder Abwärme aus einem zum Aufschmelzen des Produktes der Reduktion genutzten Schmelzaggregat, oder Wärme aus dem Topgas. Das ist zur besseren Übersichtlichkeit aber nicht extra dargestellt.

Es kann stattdessen oder zusätzlich auch eine Erwärmungsvorrichtung vorhanden sein, die zur Erwärmung elektrische Energie, Abwärme aus dem Reduktionsaggregat, oder Abwärme aus einem zum Aufschmelzen des Produktes der Reduktion genutzten Schmelzaggregat, oder Wärme aus dem Topgas, beziehungsweise mittels solcher Wärmequellen erzeugten Dampf nutzt. Das ist zur besseren Übersichtlichkeit aber nicht extra dargestellt.

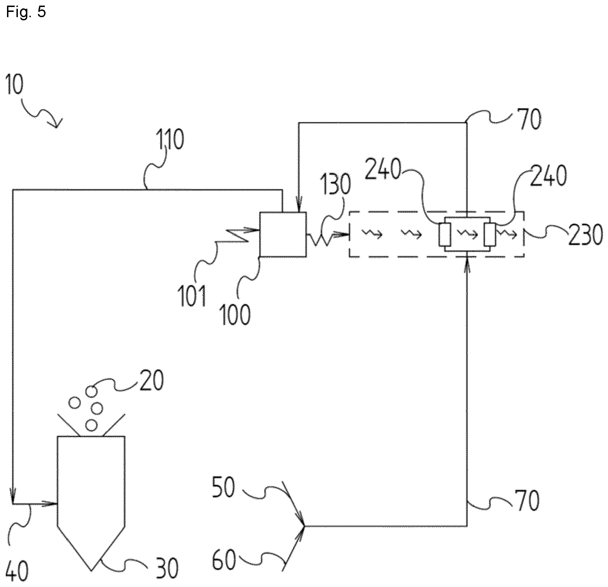

Figur 5 zeigt in Anlehnung an Figur 1 schematisch, wie über eine Rauchgasausleitung aus der Reformierungsvorrichtung 100 ausgeleitetes Rauchgas 130 bei der Spaltung des Ammoniaks in der Vorrichtung zur Ammoniakspaltung 230 genutzt werden kann. Heißes Rauchgas wird durch die Vorrichtung zur Ammoniakspaltung 230 geführt, in welcher mit Katalysator gefüllte Rohre 240 von Gemisch durchströmt werden. Das Rauchgas 230 wird um diese Rohre herumgeführt, um Wärme zu übertragen.

### Liste der Bezugszeichen

- 10: Vorrichtung zur Reduktion
- 20: metalloxidhaltiges Material
- 30: Reduktionsaggregat
- 40: Reduktionsgaseinleitung
- 50: Zuleitung für kohlenstoffhaltiges Gas
- 60: Ammoniakzuleitung
- 70: Gemischleitung
- 80: Vorrichtung zur Ammoniakspaltung
- 81: Elektrische Beheizungsvorrichtung
- 90: Spaltgasgemischleitung
- 91: Rohr
- 92: oberer Bereich
- 93: unterer Bereich
- 100: Reformierungsvorrichtung
- 101: Elektrische Beheizungsvorrichtung
- 110: Reformierungsgasleitung
- 120: Wärmetauscher
- 130: Abgas der Reformierung
- 140: Topgasausleitung
- 150: Aufbereitungsvorrichtung
- 160: Vorrichtung zur Steuerung und/oder Regelung der Mengenverhältnisse (von Ammoniak und kohlenstoffhaltigem Gas im Gemisch)
- 170: Sensor
- 180: Vorrichtung zur Steuerung und/oder Regelung der Mengenverhältnisse (von Ammoniak und Wasserstoff im Reduktionsgas)
- 190: Sensor
- 200: Wasserstoffzugabeleitung
- 210: Ammoniakzugabeleitung
- 220: Ammoniakzufuhrleitung
- 230: Vorrichtung zur Ammoniakspaltung
- 240: Rohr

## Patentansprüche

1. Verfahren zur Reduktion von metalloxidhaltigem Material,
wobei ein unter Nutzung von Ammoniak NH₃ und unter Nutzung von kohlenstoffhaltigem Gas gewonnenes Reduktionsgas eingesetzt wird,
**dadurch gekennzeichnet, dass**
bei der Gewinnung des Reduktionsgases
ein Gemisch umfassend Ammoniak und kohlenstoffhaltiges Gas zubereitet wird,
und zumindest eine Teilmenge des Gemischs
zuerst bei einer Temperatur in einem Bereich mit einer Untergrenze von 350°C, bevorzugt 450°C, und einer Obergrenze von 650°C, bevorzugt 550°C, ammoniakspaltenden Bedingungen ausgesetzt wird, wobei ein Spaltgasgemisch entsteht,
und danach zumindest eine Teilmenge des Spaltgasgemisches bei einer Temperatur in einem Bereich mit einer Untergrenze von 700°C und einer Obergrenze von 1150°C, bevorzugt 1000°C, Reformierungsbedingungen ausgesetzt wird.

2. Verfahren nach Anspruch 1, **dadurch gekennzeichnet, dass** das Gemisch in Strömungsrichtung des Gemischs gesehen zuerst durch einen Ammoniakspalter geleitet wird, und danach das dabei entstehende Spaltgasgemisch durch eine Reformierungsvorrichtung (100) geleitet wird.

3. Verfahren nach Anspruch 1, **dadurch gekennzeichnet, dass** das Gemisch durch zumindest ein Rohr geleitet wird, welches sowohl Katalysatormaterial für Ammoniakspaltung als auch Katalysatormaterial für Reformierung enthält, wobei in Strömungsrichtung des Gemischs gesehen das Katalysatormaterial für Ammoniakspaltung vor dem Katalysatormaterial für Reformierung angeordnet ist.

4. Verfahren nach einem der Ansprüche 1 bis 3, wobei eine Teilmenge des Topgases oder das gesamte Topgas nach einer Aufbereitung als Komponente bei der Zubereitung des Reduktionsgases genutzt wird, **dadurch gekennzeichnet, dass** die Aufbereitung ohne Verminderung des Kohlendioxidgehalts erfolgt.

5. Verfahren nach einem der Ansprüche 1 bis 4, wobei eine Teilmenge des Topgases oder das gesamte Topgas nach einer Aufbereitung als Komponente bei der Zubereitung des Reduktionsgases genutzt wird, **dadurch gekennzeichnet, dass** bei der Aufbereitung der Stickstoffgehalt vermindert wird.

6. Verfahren nach einem der Ansprüche 1 bis 5, **dadurch gekennzeichnet, dass** bei Reformierung anfallende Wärme zur Unterstützung endothermer Spaltungsreaktionen des Ammoniaks genutzt wird.

7. Verfahren nach einem der Ansprüche 1 bis 6, wobei die Reduktion des metalloxidhaltigen Materials in einem Reduktionsaggregat (30) durchgeführt wird, **dadurch gekennzeichnet, dass** dem Reduktionsaggregat (30) zusätzlich zur Einleitung von Reduktionsgas Ammoniak zugegeben wird.

8. Verfahren nach einem der Ansprüche 1 bis 7, **dadurch gekennzeichnet, dass** an dem Spaltgasgemisch beziehungsweise an der Teilmenge des Spaltgasgemisch, die für Reformierung vorgesehen sind, keine Verminderung des Ammoniakgehaltes vorgenommen wird.

9. Vorrichtung zur Reduktion (10) von metalloxidhaltigem Material (20),
umfassend:
- ein Reduktionsaggregat (30),
- eine in das Reduktionsaggregat (30) mündende Reduktionsgaseinleitung (40),
- eine Zuleitung für kohlenstoffhaltiges Gas (50),
- eine Ammoniakzuleitung (60),
**dadurch gekennzeichnet, dass**
die Zuleitung für kohlenstoffhaltiges Gas (50) und die Ammoniakzuleitung (60) in eine Gemischleitung (70) münden,
und die Gemischleitung (70) in eine Vorrichtung zur Ammoniakspaltung (80) mündet, und von der Vorrichtung zur Ammoniakspaltung (80) eine Spaltgasgemischleitung (90) ausgeht,
welche in eine Reformierungsvorrichtung (100) mündet,
und von der Reformierungsvorrichtung (100) eine Reformierungsgasleitung (110) ausgeht, welche in die Reduktionsgaseinleitung (40) mündet.

10. Vorrichtung nach Anspruch 9, **dadurch gekennzeichnet, dass** die Vorrichtung zur Ammoniakspaltung (80) einen Wärmetauscher (120) zum Wärmetausch mit Rauchgas aus der Reformierungsvorrichtung (100) umfasst.

11. Vorrichtung nach Anspruch 9 oder 10, **dadurch gekennzeichnet, dass** die Vorrichtung zur Ammoniakspaltung (80) als Ammoniakspalter ausgeführt ist.

12. Vorrichtung nach Anspruch 9 oder 10, **dadurch gekennzeichnet, dass** die Vorrichtung zur Ammoniakspaltung (80) integriert in Teilen der Reformierungsvorrichtung (100) ausgeführt ist.

13. Vorrichtung nach einem der Ansprüche 9 bis 12 mit einer Topgasausleitung (140) zur Ausleitung von Topgas aus dem Reduktionsaggregat (30), **dadurch gekennzeichnet, dass** die Topgasausleitung (140) keine Vorrichtung zur Verminderung des Kohlendioxidgehalts enthält.

14. Vorrichtung nach einem der Ansprüche 9 bis 13 mit einer Topgasausleitung (140) zur Ausleitung von Topgas aus dem Reduktionsaggregat (30), **dadurch gekennzeichnet, dass** die Topgasausleitung (140) zumindest eine Vorrichtung zur Abtrennung von Stickstoff N₂ enthält.

15. Vorrichtung nach einem der Ansprüche 9 bis 14, **dadurch gekennzeichnet, dass** sie zumindest eine Ammoniakzufuhrleitung (220) zur Zugabe von Ammoniak in das Reduktionsaggregat (30) umfasst.
